# FASCICULE DE BREVET EUROPEEN

(11) **EP 2 995 926 B1**
(45) Date de publication et mention de la délivrance du brevet: **20.03.2019**
(21) Numéro de dépôt: 15185099.7
(22) Date de dépôt: 14.09.2015
(51) Int. Cl.: G01N 3/48, G01N 33/24

(54) **MÉTHODE DE CARACTÉRISATION DE L'ASSISE D'UNE VOIE FERRÉE ET ENSEMBLE DE CARACTÉRISATION DE L'ASSISE D'UNE VOIE FERRÉE COMPRENANT UN DISPOSITIF POUR VISUALISER L'INTÉRIEUR D'UN SOL**
VERFAHREN ZUR CHARAKTERISIERUNG DER TRAGSCHICHT EINES GLEISWEGS UND GESAMTHEIT ZUR CHARAKTERISIERUNG DER TRAGSCHICHT EINES GLEISWEGS MIT EINER VORRICHTUNG ZUM ANZEIGEN DES INNENAUFBAUS EINES BODENS
METHOD FOR CHARACTERISING THE SEAT OF A RAILWAY TRACK AND ASSEMBLY FOR CHARACTERISING THE SEAT OF A RAILWAY TRACK COMPRISING A DEVICE FOR VIEWING THE INSIDE OF A SOIL

(30) Priorité: 15.09.2014 FR 1458644
(43) Date de publication de la demande: 16.03.2016
(73) Titulaire: Sol Solution, 63200 Riom (FR)
(72) Inventeur: GOURVES, Roland, 63200 MARSAT (FR); HADDANI, Younes, 63450 CHANONAT (FR)
(74) Mandataire: Lavoix

(56) Documents cités:
- FR-A1- 2 938 276
- Haddani Younes ET AL: "GEOENDOSCOPIE : APPLICATION AU DIAGNOSTIC DES RESEAUX TECHNIQUES URBAINS SOUTERRAINS EN SERVICE", JNGG Octobre, 9 octobre 2002 (2002-10-09), pages 1-10, XP055156115, Nancy, France Extrait de l'Internet: URL:http://www.geotech-fr.org/sites/defaul t/files/congres/jngg/JNGG 2002 D pp Haddani.pdf [extrait le 2014-12-01]
- "Variable energy light weight dynamic cone penetrometer Compaction control and soil investigation System devised and developed by SOL SOLUTION NF P 94-105 standard", , 31 décembre 2012 (2012-12-31), XP055187892, ZA des Portes de Riom Nord - BP 178-63204 RIOM cedex France Extrait de l'Internet: URL:http://www.sol-solution.com/pdf/index/ ?fichier=uploads/HTMLeditor//panda 2 brochure.pdf [extrait le 2015-05-07]
- : D D Langton: "THE PANDA LIGHT-WEIGHT PENETROMETER FOR SOIL INVESTIGATION AND MONITORING MATERIAL COMPACTION", , 31 décembre 1999 (1999-12-31), XP055187897, Extrait de l'Internet: URL:http://www.ticservicegroup.com.au/wp-c ontent/uploads/2011/11/Panda_Technical_Des cription_Understanding_Results_and_Correla tions.pdf [extrait le 2015-05-07]

## Description

L'invention concerne une méthode de caractérisation des couches d'assise d'une voie ferrée par couplage d'un essai pénétrométrique et géo-endoscopique.

L'invention vise à établir un diagnostic géotechnique et obtenir, le plus précisément possible, des paramètres permettant de caractériser la nature et l'état hydrique des différentes couches d'assise d'une voie ferrée en service. Cela permet notamment d'évaluer si des travaux de renouvellement ou de réfection sont nécessaires sur la voie.

L'invention concerne également un dispositif pour visualiser l'intérieur d'un sol, ce dispositif étant couramment appelé « géo-endoscope ». L'invention concerne enfin un ensemble de caractérisation d'un sol, comprenant un tel dispositif, un pénétromètre dynamique léger type Panda (marque déposée) et une unité de traitement.

Les voies ferrées ballastées, développées depuis bientôt deux siècles, sont construites au moyen d'un ensemble d'éléments conçus pour supporter le poids des wagons. Parmi ces éléments, on distingue la superstructure, ou armement, qui comprend des rails, disposés sur des traverses et des attaches pour fixer les rails aux traverses. La superstructure comprend également des semelles de fondation, qui transmettent la charge supportée par les rails au sol et une couche de ballast, avec éventuellement une sous-couche de ballast. Le ballast est un matelas de roches concassées, qui assure la transmission uniforme jusqu'à la plateforme des contraintes induites par le passage de véhicules ferroviaires. Le ballast permet également de stabiliser les traverses et d'amortir les vibrations mécaniques et acoustiques liées au passage d'un train, ce qui participe au confort des voyageurs à bord des trains. Le ballast est en outre prévu pour drainer l'eau de pluie afin de limiter les problèmes de gel sur les voies. On distingue par ailleurs l'infrastructure, qui est constituée par une plateforme.

En pratique, les éléments de la voie sont conçus pour transmettre le poids des trains jusqu'à la plateforme. La superstructure permet normalement de diminuer la contrainte exercée sur la plateforme d'un facteur de l'ordre de 20000 par rapport à celle exercée au niveau des points de contact entre les roues et le rail. Cela permet d'éviter notamment que la plateforme soit déformée par le ballast.

La vitesse, le poids des trains et la densité du trafic ont considérablement augmenté avec le progrès technologique de ces dernières années, ce qui engendre une usure accélérée des composants de la voie, notamment du ballast. Le ballast nécessite donc d'être entretenu davantage afin que d'autres composants de la voie ne soient pas endommagés. Ainsi, les opérations de réparation des voies, comme les tassements discontinus et différentiels, sont plus fréquentes, ce qui entraîne une forte augmentation des coûts d'entretien et, dans certains cas, des renouvellements précoces. En effet, on estime que la maintenance du ballast et de la géométrie de la voie représentent environ la moitié du coût global de maintenance des voies ferrées, ce qui provient notamment du fait que les travaux sont effectués pendant la nuit.

Pour résister aux charges, les composants de la superstructure ont évolué. Des traverses en béton précontraint sont désormais utilisées car elles présentent une durée de vie trois fois supérieure à celles des traverses en bois. Des profils de rail plus lourds et des attaches élastiques ont été développés pour résister à l'importance du trafic. Des semelles sous-rail et sous-traverse ont été intégrées dans l'armement pour amortir les vibrations. Les géotextiles et les sous-couches bitumineuses sont appliqués à la base de la plateforme pour garantir le drainage et la répartition des charges.

En revanche, il n'y a pas eu de progrès concernant la protection du ballast. Pour faire face aux sollicitations croissantes, des valeurs d'épaisseur et de dureté minimales ont été imposées pour le ballast. Toutefois, celui-ci reste l'élément qui se dégrade le plus rapidement dans une voie ferrée. Cette dégradation est accélérée par les sollicitations dues aux circulations, mais aussi par celles dues aux travaux de maintenance, comme le bourrage, qui sont devenues plus fréquentes.

La dégradation du ballast se traduit par une attrition des particules, c'est-à-dire un changement de la taille des grains, mais aussi par la remontée du sol, qui provient notamment des sollicitations dynamiques engendrées sur la voie par le passage des trains. Il apparait alors deux couches, couramment dénommées « couche de ballast pollué » et couche « intermédiaire ». La couche de « ballast pollué », qui se trouve entre la couche intermédiaire et la couche de ballast, est formée de ballast ainsi que de fines issues notamment de l'attrition du ballast. La « couche intermédiaire » est créée par interpénétration des couches du sol support avec d'éventuelles couches de matériaux, telles que des pierres cassées, du gravier, du sable, ou encore du mâchefer, qui sont issues de la construction de la ligne ou des opérations de maintenance. Cette couche est assez hétérogène et contient, entres autres, plus de fines du sol support et plus de fines particules que le ballast. La création de ces deux couches au sein d'une section de voie pose des problèmes de stabilité mécanique et hydraulique, comme un mauvais drainage, un concassage des grains de la couche de ballast « sain », un tassement de la voie, ou encore une déformation de la plateforme.

Pour faire face à la dégradation des voies, un vaste programme de renouvellement des voies a été lancé sur le territoire français. Le problème qui se pose est d'établir de manière efficace et économique un diagnostic de l'état des voies ferrées, avec notamment pour objectif de détecter les couches de « ballast pollué » et « intermédiaire ». Compte tenu de la longueur des voies, les moyens de caractérisation du sol doivent permettre d'ausculter de manière fiable, peu coûteuse et rapide, le plus grand nombre de points possibles le long d'une voie. Parmi ces moyens, on connait le train carotteur, qui permet de prélever des échantillons de la section de la voie. Les épaisseurs des différentes couches du sol sont mesurées manuellement grâce à une toise ou un mètre et sont retranscrites manuellement sur une feuille de chantier. Cette technique d'auscultation n'est pas la plus adaptée car il n'existe qu'un seul train carotteur sur le Réseau Ferré National et que le coût de type d'intervention est élevé. En effet, quatre personnes dont un chauffeur au taux horaire élevé sont généralement nécessaires pour réaliser les sondages. En outre, le carottage est généralement réalisé entre les deux rails alors que la zone la plus sensible est sous les traverses. Cette technique manque par ailleurs de précision dans la mesures des épaisseurs des couches car il y a un risque de décalage lors de la remontée du carottier, surtout pour les matériaux sableux. Cette technique ne permet pas enfin de mesurer la résistance du sol.

Une technique plus élaborée consiste en l'utilisation d'un pénétromètre dynamique léger type Panda, produit commercialisé par la société SOL SOLUTION, et d'un essai géo-endoscopique. Voir p.e. FR-A1-2938276. Le principe consiste à mesurer la résistance du sol en fonction de la profondeur en enfonçant un train de tiges du pénétromètre dans le sol. Les tiges sont ensuite retirées pour laisser place à des tubes fendus, dans lesquels coulisse un endoscope. Une vidéo est alors enregistrée pour le point ausculté et est sauvegardée sur un enregistreur numérique. L'interprétation des épaisseurs des couches du sol est réalisée manuellement à l'aide d'un mètre, en regardant les changements de nature des sols à l'écran du géo-endoscope ou de l'enregistreur. Les résultats sont ensuite retranscrits sur une feuille de chantier. Le technicien effectue enfin une analyse croisée avec les résultats obtenus avec le pénétromètre Panda pour rendre un diagnostic.

Bien qu'intéressante, cette technique d'auscultation est relativement longue du fait de la retranscription manuelle des données et il n'y a aucune mesure automatique et en continu quant à la profondeur à laquelle les images et la vidéo du géo-endoscope sont enregistrées. Le diagnostic de l'état du sol repose en partie sur l'interprétation du technicien, ce qui peut conduire à des erreurs.

Une technique d'auscultation analogue est décrite dans WO-A-2010/082002 et vise à caractériser les différentes couches d'un milieu filtrant, ou filtre, formant un système d'épuration d'eau. Ce filtre comprend une partie supérieure essentiellement formée de graviers, une partie intermédiaire de filtration formée de sable lavé et une partie inférieure également à base de graviers. L'essai pénétrométrique donne des informations sur la compacité des différentes couches du milieu filtrant, alors que l'essai endoscopique permet de vérifier les états de colmatage et de saturation du milieu filtrant. Une analyse automatique d'images est effectuée postérieurement à l'essai endoscopique pour caractériser les différentes couches du milieu filtrant mais il n'est pas fait mention d'une mesure automatique de la profondeur à laquelle sont prises les images. Cette mesure semble en effet inutile dans ce cas puisque l'essai géoendoscopique ne vise pas déterminer la profondeur des différentes couches du milieu filtrant.

C'est à ces inconvénients qu'entend plus particulièrement remédier l'invention en proposant une méthode de caractérisation de l'assise d'une voie ferrée permettant de pallier les difficultés techniques et pratiques de mise en oeuvre des sondages rencontrées avec les moyens actuels.

A cet effet, l'invention concerne une méthode de caractérisation de l'assise d'une voie ferrée par des essais pénétrométrique et géo-endoscopique, telle que définie à la revendication 1.

Grâce à l'invention, les erreurs systématiques de la prise de mesure sont évitées puisque la profondeur à laquelle sont prises les images de la caméra est mesurée automatiquement. De plus, le temps de réalisation et d'exploitation des sondages est raccourci puisque les données obtenues par les essais géo-endoscopique et pénétrométrique sont automatiquement couplées et analysées.

Des aspects avantageux mais non obligatoires d'une telle méthode de caractérisation sont spécifiés aux revendications 2 à 6.

L'invention concerne également un ensemble de caractérisation de l'assise d'une voie ferrée, tel que défini à la revendication 7.

Des aspects avantageux mais non obligatoires d'un tel ensemble sont spécifiés aux revendications 8 et 9.

L'invention et d'autres avantages de celle-ci apparaitront plus clairement à la lumière de la description qui va suivre d'un mode de réalisation d'une méthode de caractérisation de l'assise d'une voie ferrée conforme à son principe, donnée uniquement à titre d'exemple et faite en référence aux dessins dans lesquels :
- la figure 1 est une vue en perspective d'un pénétromètre dynamique léger utilisé lors de la mise en oeuvre d'une méthode de caractérisation de l'assise d'une voie ferrée conforme à l'invention,
- la figure 2 représente une vue en perspective éclatée d'un porte pointe et d'une pointe appartenant à un train de tiges du pénétromètre dynamique de la figure 1 et d'une variante montrant un porte-pointe et une pointe de diamètres différents,
- la figure 3 est une vue en perspective d'un dispositif pour visualiser l'intérieur d'un sol de voie ferrée conforme à l'invention, qui est également utilisé pour la mise en oeuvre de la méthode de caractérisation de l'assise conforme à l'invention,
- la figure 4 est un diagramme représentant les différentes étapes de réalisation de la méthode de caractérisation de l'assise d'une voie ferrée conforme à l'invention,
- la figure 5 montre un exemple de pénétrogramme et un exemple de trois graphiques illustrant la variation de paramètres relatifs aux images enregistrées au moyen du dispositif de la figure 3, en fonction de la profondeur dans le sol, et
- la figure 6 est un exemple d'un tableau de résultats obtenus par la mise en oeuvre de la méthode de caractérisation du sol conforme à l'invention.

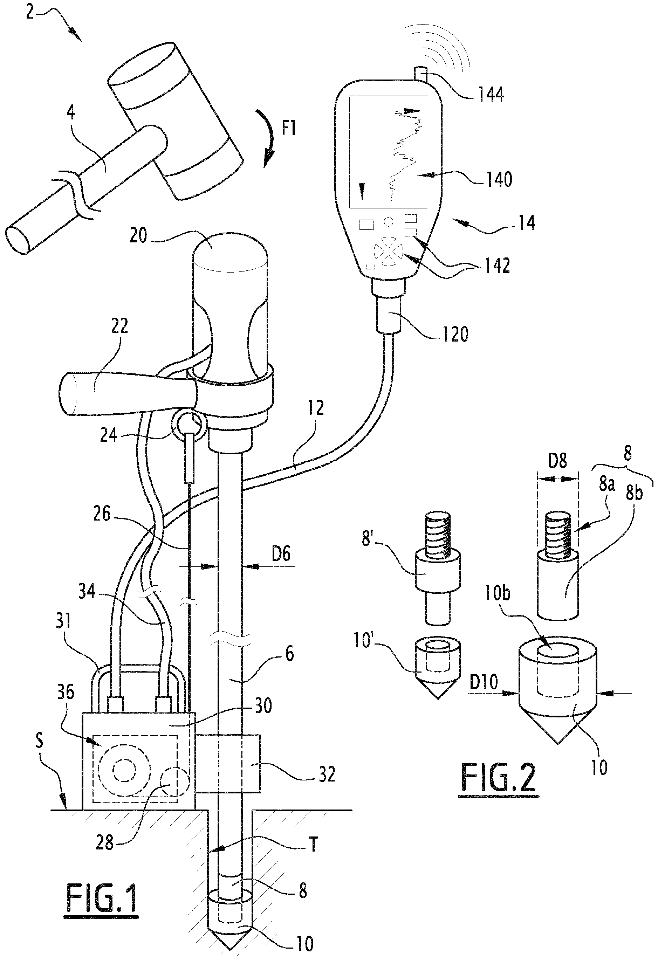

Sur la figure 1 est représenté un pénétromètre dynamique léger 2 du type Panda (marque déposée). Ce pénétromètre 2 a une masse inférieure à 20 kg, si bien qu'il est facilement transportable par un opérateur. Ce pénétromètre 2 est en outre peu encombrant, ce qui facilite les interventions à accès restreint. Il est par ailleurs rapidement repliable en cas d'urgence.

Le pénétromètre dynamique 2 s'étend globalement selon un axe Z2 qui, lors d'un essai, est vertical. Il comporte, en partie supérieure, une tête de battage 20 adaptée pour recevoir un coup de marteau 4 pour enfoncer un train de tiges 6 dans le sol. Le pénétromètre 2 comprend également une poignée 22 pour maintenir le train de tiges 6 droit lors du coup de marteau. Le train de tiges 6 s'étend de manière rectiligne le long de l'axe Z2 et comprend une ou plusieurs tiges cylindriques assemblées les unes avec les autres. Chaque tige du train de tiges 6 présente un diamètre D6, par exemple de l'ordre de 14 mm. Un porte-pointe 8 est vissé à une extrémité inférieure du train de tige 6. Comme son nom l'indique, le porte-pointe 8 est adapté pour être assemblé avec une pointe conique 10 de pénétration dans un sol S. Ici, le sol S représente l'assise d'une voie ferrée, c'est-à-dire qu'il comprend toutes les couches d'assise d'une voie ferrée.

Comme mieux visible à la figure 2, le porte-pointe 8 comprend une partie supérieure filetée 8a, ce qui permet de le visser à l'extrémité inférieure du train de tige 6. Le porte-pointe 8 comprend également un cylindre inférieur 8b de diamètre D8. En pratique, le diamètre D8 est le même que le diamètre D6 de la ou des tiges du train de tiges 6.

La pointe conique 10 comprend une partie supérieure cylindrique et une partie inférieure conique. Cette pointe 10 est débordante, c'est-à-dire qu'elle présente une section à la base du cône qui est plus large que celle du porte-pointe 8. En pratique, le diamètre maximal de la pointe 10 est de l'ordre de 22 mm. Cette pointe conique 10 comprend un logement cylindrique 10b de réception du cylindre inférieur 8b du porte-pointe 8. Le diamètre D8 de ce cylindre est sensiblement égal au diamètre du logement cylindrique ménagé dans la pointe 10.

A titre de variante représentée à la figure 2, une pointe conique 10' qui n'est pas à section débordante peut également être utilisée. Cette pointe conique 10' est prévue pour être assemblée avec un porte-pointe 8' de même diamètre. Elle refoule moins de terre lors de la remontée mais ne s'enfonce pas aussi facilement dans le sol que la pointe 10.

La faible section de l'une ou l'autre des pointes coniques 10 et 10' permet de réduire la pénibilité du sondage et d'éviter la fermeture du forage lors du retrait du train de tiges 6 hors du sol.

Par ailleurs, la pointe conique 10 ou 10' n'est pas fixée sur le porte-pointe 8 ou 8', c'est-à-dire que lorsque le train de tige 6 est retiré, la pointe conique 10 ou 10' reste au fond du forage. Cela permet d'éviter que la pointe 10 racle contre les parois d'un trou, ou forage, T lors du retrait et que le trou T soit rebouché. Ceci est d'autant plus important lorsque le sol sondé est du type sableux.

Le pénétromètre 2 comprend également un boîtier 30, pourvu d'une poignée 31. Ce boitier 30 est adapté pour être posé au sol lors d'un essai. Le boîtier 30 comprend une portion 32 de guidage du train de tiges 6 dans son mouvement de pénétration dans le sol S. Cette portion de guidage 32 est traversée par le train de tige 6 de manière que celui-ci ne puisse pas se mettre en travers lorsque la tête de battage 20 est frappée par le marteau 4.

Le pénétromètre 2 comprend également des moyens de mesure de l'enfoncement du train de tiges 6 dans le sol S. Ces moyens comprennent un fil tendu 26, qui attaché, d'une part, sur une boucle 24 solidaire d'une partie mobile du pénétromètre 2, en l'occurrence la tête de battage 20 dans l'exemple de la figure 1 et, d'autre part, à une roue 28 contenue dans le boitier 30. Le fil 26 est maintenu sous tension par des moyens non représentés, tels qu'un ressort agissant sur la roue. Lorsque la tête de battage 20 reçoit un coup de marteau, comme représenté par la flèche F1 à la figure 1, le train de tiges 6 et la tête de battage 20 s'enfoncent dans le sol S et le fil 26 se détend. Ce dernier est alors retendu, ce qui fait tourner la roue 28 autour de laquelle s'enroule le fil 26. L'amplitude de rotation de la roue 28 est mesurée par un calculateur 36, qui est capable d'en déduire la profondeur à laquelle le train de tiges 6 s'est enfoncé dans le sol S. Ce calculateur 36 inclut par exemple un codeur rotatif.

Par ailleurs, le boîtier 30 est relié à la tête de battage 20 par un câble 34. Ce câble 34 permet de collecter, auprès d'un capteur de force, non représenté, logé dans la tête de battage 20, la force de battage appliquée sur cette dernière par l'opérateur. Cette mesure est ensuite transmise au calculateur 36. Ainsi, ce capteur de force forme avec les moyens de mesure de l'enfoncement du train de tiges 6 dans le sol S des moyens de mesure de la résistance du sol en fonction de la profondeur.

Un câble 12 comprend une première extrémité attachée au boîtier 30 et une deuxième extrémité 120 connectée à un lecteur 14, comme un appareil numérique portable du type « Personnal Digital Assistant ». Ce lecteur 14 comprend un écran 140 permettant à l'opérateur de visualiser la résistance du sol en fonction de la profondeur. Il comprend également des boutons de commande 142 et une antenne de géolocalisation 144.

Par ailleurs, à la figure 1, le train de tiges 6, le câble 34, le fil 26 et le manche du marteau 4 sont coupés en longueur pour une meilleure visualisation.

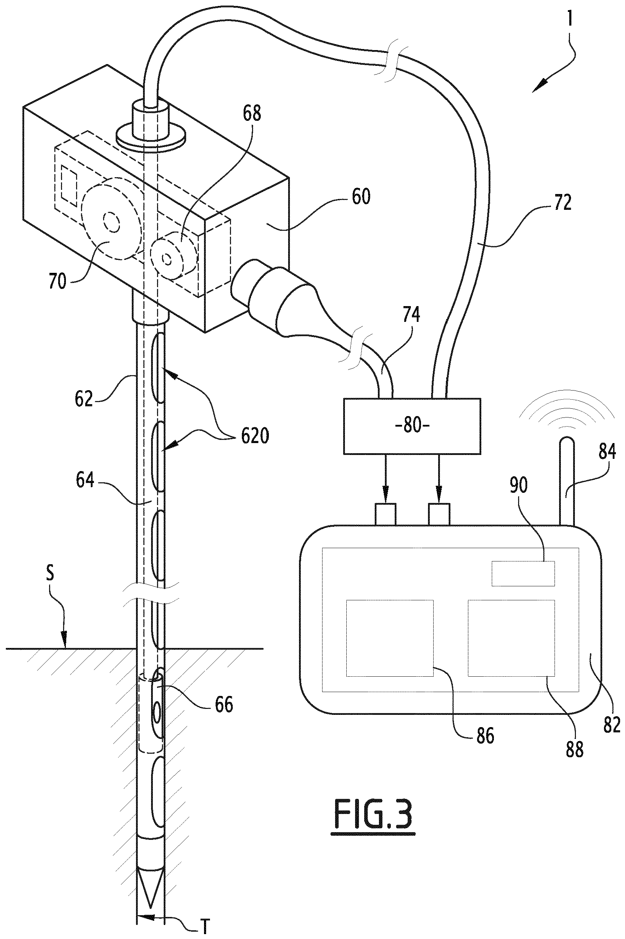

Sur la figure 3 est représenté un dispositif 1 pour visionner l'intérieur d'un sol S. Ce dispositif 1 est couramment appelé géo-endoscope et comprend un tube 62, adapté pour être enfoncé à la verticale dans un trou T ménagé dans le sol. Le tube 62 comprend plusieurs fenêtres 620 réparties sur toute la hauteur du tube. Ces fenêtres 620 permettent à une caméra 66 de visualiser l'intérieur du sol. En variante non représentée, on peut envisager un tube fendu sur toute sa hauteur, c'est-à-dire qui ne s'étend pas sur 360° en section, ce qui permettrait à la caméra de visualiser les images du sol à travers la fente pratiquée dans le tube. La caméra 66 est suspendue au bout d'un fil 64 et est coulissée manuellement ou de manière commandée à l'intérieur du tube 62. Cette caméra 66 est pourvue de moyens d'éclairage non représentés, qui sont nécessaires à l'enregistrement d'images. Dans l'exemple, la caméra 66 est adaptée pour enregistrer à la fois des images et une séquence vidéo.

Le dispositif 1 comprend des moyens de mesure automatique et en continu de la position de la caméra 66 pendant qu'elle coulisse à l'intérieur du tube 62, c'est-à-dire à la profondeur à laquelle sont enregistrées les images. Ces moyens de mesure incluent un boitier 60, qui est solidaire du tube 62 et qui est disposé à une extrémité supérieure de celui-ci. Le boitier 60 est pourvu d'une ouverture non représentée pour l'insertion de la caméra 66. Il renferme une roue 68 autour de laquelle s'enroule le fil 64, à l'extrémité duquel est fixée la caméra 66. Une extrémité du fil 64 est donc attachée à la roue 68. Cette roue 68 est couplée à un codeur rotatif 70 pour mesurer l'amplitude de rotation de la roue 68 et en déduire le déplacement de la caméra 66 dans le sol S. Plus précisément, à titre d'exemple, le codeur rotatif 70 peut comprendre un disque entrainé en rotation par le mouvement de la roue 68, par exemple au moyen d'une courroie. Ce disque est pourvu d'aimants, qui déclenchent un compteur lorsqu'ils passent devant un capteur, par exemple du type effet Hall, puisqu'ils génèrent un champ magnétique. En pratique, le codeur rotatif 70 est un codeur électronique, mais il peut également s'agir d'un codeur optique.

Le dispositif 1 comprend deux câbles 72 et 74, qui sont chacun issus du boîtier 60 et qui sont connectés à un adaptateur 80. Le câble 72 transmet à l'adaptateur 80 les images et/ou vidéos prises par la caméra 66 alors que le câble 74 transmet à l'adaptateur 80 la mesure de la profondeur effectuée par le codeur rotatif 70. L'adaptateur 80 permet de convertir les signaux envoyés par la caméra 66 et le codeur rotatif 70 dans un format exploitable par un appareil numérique portatif 82, du type « Personnal Digital Assistant », à qui il transmet les informations. Cet appareil 82 comprend une interface d'affichage ayant un cadran 86 pour visualiser en direct la vidéo prise par la caméra 66 et un cadran 88 des dernières images enregistrées par la caméra 66. Il comprend également un rectangle 90 d'affichage de la profondeur à laquelle se trouvent la caméra 66 et une antenne de géolocalisation 84.

Sur la figure 3, les câbles 72 et 74 et le tube 62 sont représentés partiellement en longueur pour une meilleure visualisation.

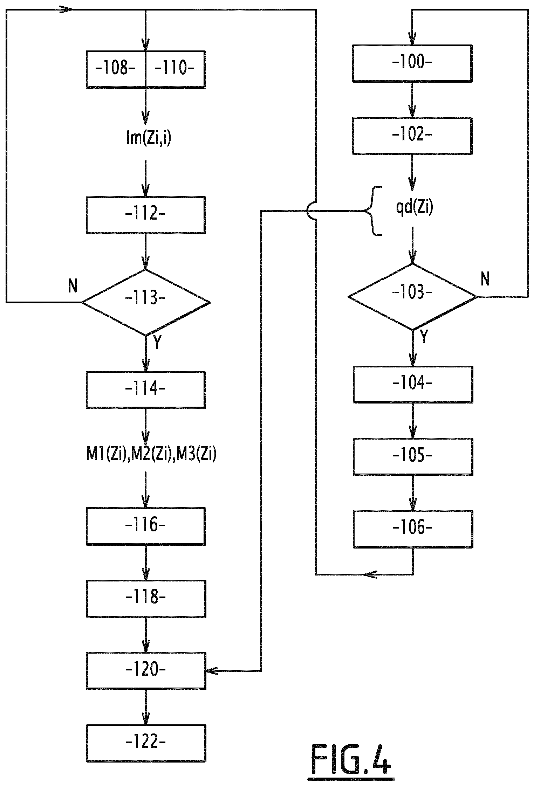

Ci-dessus est décrite une méthode de caractérisation d'un sol par couplage d'un essai pénétrométrique et géo-endoscopique. Cette méthode est décrite en référence à la figure 4.

Cette méthode de caractérisation commence par un essai pénétrométrique, qui est géo-localisé par l'intermédiaire de l'antenne 144. Lors de cet essai, l'opérateur positionne le train de tiges 6 à la verticale au contact du sol S dans un emplacement sélectionné. L'opérateur prend ensuite le marteau 4 et frappe, lors d'une étape 100, la tête de battage 20 du pénétromètre 2 pour enfoncer la pointe 10 du train de tige 6 dans le sol S. Le train de tige 6 crée alors un trou T dans le sol S.

Ensuite, lors d'une étape 102, la variation de la résistance du sol qd(Zi) en fonction de la profondeur Zi est déterminée à partir de la mesure de la force de battage exercée par l'opérateur et de la mesure de la profondeur Zi. Il convient alors de déterminer si l'essai pénétrométrique est terminé, ce qui est représenté par une étape 103 à la figure 4. En effet, en fonction de la compacité du sol, il se peut que l'opérateur n'ait pas tapé assez fort sur la tête de battage 20 et doive recommencer l'essai et taper plus fort pour enfoncer davantage le train de tiges 6 dans le sol S. Cela est représenté par la boucle retour vers l'étape 100.

En revanche, si l'essai pénétromètrique est terminé, c'est à dire si la profondeur requise est atteinte, le pénétromètre 2 est capable de fournir à l'opérateur un pénétrogramme, qu'il affiche sur l'interface 140 du lecteur 14. Ce pénétrogramme consiste à afficher la résistance du sol, par exemple en MPa, en fonction de la profondeur Zi, par exemple en mètre. En outre, un premier ensemble de données comprenant la série de valeurs de résistance qd(Zi) pour chaque valeur de profondeur Zi ainsi que les coordonnées GPS du lieu de l'essai est stocké en mémoire lors d'une étape 104. Ce premier ensemble de données peut être stocké sur tout moyen de support approprié, comme une carte ou une clé. Ce moyen de support est ensuite retiré du pénétromètre 2 par un opérateur et connecté à une unité de traitement non-représentée, telle qu'un ordinateur de chantier ou de bureau. Cela permet de transférer le premier ensemble de données à l'unité de traitement. En variante, le premier ensemble de données peut être transféré du pénétromètre 2 à l'unité de traitement directement par voie filaire ou au moyen d'une connexion sans fil.

Une fois l'essai terminé, le train de tiges 6 est retiré du sol lors d'une étape 105 et l'essai géo-endoscopique commence. Cet essai géo-endoscopique est géo-localisé puisque l'appareil numérique portatif 82 comprend une antenne de géolocalisation 84. Une première étape 106 de cet essai consiste à enfoncer le tube 62 du géo-endoscope 1 dans le trou, ou forage, T laissé par le train de tiges 6. Ensuite, la caméra 66 d'enregistrement d'images est coulissée à l'intérieur du tube 62 lors d'une étape 108.

En parallèle, la position de la caméra 66 à l'intérieur du tube 62 est mesurée automatiquement lors d'une étape 110. De cette manière, il est possible de connaitre la profondeur à laquelle est enregistrée chaque image enregistrée par la caméra 66 pendant que cette dernière coulisse à l'intérieur du tube 62. En opposition avec les techniques de mesure connues de l'art antérieur, où la position de la caméra 66 était mesurée manuellement à l'aide d'un mètre enfoncé dans le tube lorsque l'opérateur semblait apercevoir sur l'écran du géo-endoscope un changement de nature du sol, la position de la caméra 66 est mesurée de manière électronique, c'est-à-dire automatique et en continu, par l'intermédiaire du codeur rotatif 70. Cela permet de réduire les erreurs de mesure de la position de la caméra et facilite l'interprétation des résultats. Ici, le fait de mesurer en continu signifie que les points de mesure sont distants d'une valeur négligeable pour l'application concernée. En pratique, le codeur 70 permet de mesurer la position de la caméra 66 tous les 1 mm.

Pendant l'essai géo-endoscopique, un deuxième ensemble de données comprenant les images Im(Zi, i) enregistrées par la caméra 66, la profondeur Zi à laquelle a été enregistrée chaque image et les coordonnées GPS du lieu de l'essai est stocké en mémoire lors d'une étape 112. Ce deuxième ensemble de données peut être stocké sur tout moyen de support approprié, comme une carte ou une clé. Ce moyen de support peut ensuite être retiré du dispositif 1 par un opérateur et être connecté à l'unité de traitement. Cela permet de transférer le deuxième ensemble de données vers l'unité de traitement. En variante, le deuxième ensemble de données peut être transféré du dispositif 1 à l'unité de traitement directement par voie filaire ou au moyen d'une connexion sans fil.

Par la suite, la méthode comprend une étape 113 pour déterminer si l'essai géo-endoscopique est terminé, c'est-à-dire si la caméra 66 est parvenue jusqu'au fond du trou T. Si ce n'est pas le cas, l'essai géo-endoscopique continue jusqu'à ce que la caméra 66 atteigne le fond du trou T, comme représenté par la boucle retour en direction des étapes 108 et 110. En revanche, si l'essai est terminé, l'opérateur peut transférer le deuxième ensemble de données dans l'unité de traitement.

Cette unité de traitement effectue une analyse 114 des images enregistrées par la caméra 66 en fonction de la profondeur à laquelle elles ont été prises. Cette analyse consiste à étudier la variation de différents paramètres relatifs aux images enregistrées par la caméra 66 en fonction de la profondeur Zi. Plus précisément, le traitement d'images effectué par l'unité de traitement se base sur l'analyse de trois paramètres M1(Zi), M2 (Zi) et M3 (Zi) qui sont caractéristiques des images enregistrées par la caméra 66 en fonction de la profondeur. En pratique, ces trois paramètres M1(Zi), M2 (Zi) et M3 (Zi) traduisent des variations de différentes valeurs liées aux images, comme le contraste, la luminosité etc... Les trois paramètres M1(Zi), M2 (Zi) et M3 (Zi) sont stockés en mémoire au sein du géo-endoscope lors d'une étape 116. En variante non représentée, plus ou moins de paramètres peuvent être utilisés pour l'analyse.

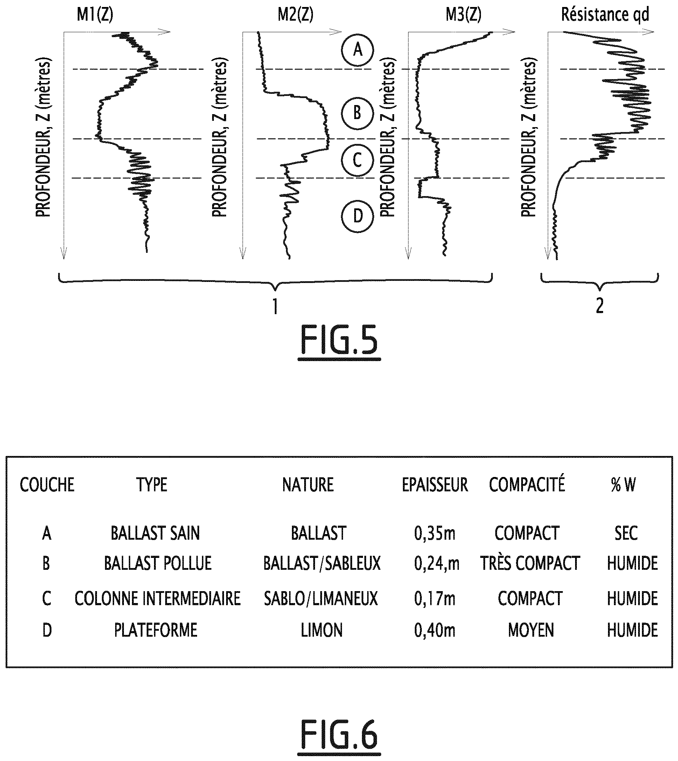

L'unité de traitement peut afficher, lors d'une étape 118, des graphiques de visualisation des trois paramètres M1(Zi), M2(Zi), M3(Zi) en fonction de la profondeur Zi. Un exemple de tels graphiques est représenté à la figure 5. Sur cette figure, on distingue différentes zones A, B, C et D qui proviennent des variations observées dans les différents graphiques. Comme représenté par les deux accolades à la figure 5, les graphiques des trois paramètres M1(Zi), M2(Zi), M3(Zi) sont obtenus au moyen du géo-endoscope 1 alors que le pénétrogramme est obtenu par l'intermédiaire du pénétromètre dynamique léger 2.

Le fait que les essais pénétrométrique et géo-endoscopique soient tous deux géo-localisés peut permettre, dans le cas où plusieurs essais sont réalisés à différents endroits espacés les uns de autres, à l'unité de traitement de coupler, ou d'associer chaque premier ensemble de données au deuxième ensemble de données correspondant. Cela permet en outre de répertorier sur une carte tous les emplacements où des essais ont été effectués.

Par couplage entre les résultats issus de l'essai géo-endoscopique et ceux issus de l'essai pénétrométrique, l'unité de traitement compile le premier ensemble de données et le deuxième ensemble de données et distingue automatiquement, par l'intermédiaire d'un algorithme mis en oeuvre lors d'une étape 120, les changements de nature du sol, c'est-à-dire les différentes zones A, B, C et D. Plus précisément, l'étape 120 comprend une première sous-étape consistant à déterminer automatiquement des valeurs de profondeur (Zi) significatives, à partir desquelles les différents paramètres M1(Zi), M2(Zi), M3(Zi) relatifs aux images enregistrées et la résistance du sol qd(Zi) varient sensiblement. Ensuite, l'étape 120 comprend une deuxième sous-étape consistant à effectuer une analyse statistique, par exemple une moyenne, des valeurs de profondeur significatives pour estimer le plus précisément possible l'épaisseur des couches du sol S.

L'étape de couplage 120 inclut une troisième sous-étape automatisée consistant à analyser les valeurs des différents paramètres M1(Zi), M2(Zi), M3(Zi) relatifs aux images enregistrées sur l'épaisseur des différentes couches pour déterminer l'état hydrique de ces dernières.

Il ressort en sortie de l'étape 120 un tableau estimatif de la nature, de la compacité, de l'épaisseur et de l'état hydrique des différentes couches constitutives du sol sondé. Un exemple d'un tel tableau est représenté à la figure 6. Ce tableau est affiché par l'unité de traitement lors d'une étape 122.

Comme mentionné précédemment, les étapes 110, 112, 114 et 120 sont automatisées, c'est-à-dire qu'elles sont effectuées automatiquement par l'unité de traitement, le pénétromètre 2 ou le géo-endoscope 1, sans intervention humaine.

Dans l'exemple, l'état hydrique des différentes couches du sol S est déterminé au moyen de l'essai géo-endoscopique, c'est-à-dire à partir de la variation des paramètres M1(Zi) M2(Zi), M3(Zi) en fonction de la profondeur Zi. La nature des différentes couches du sol est déterminée à partir des valeurs de compacité et de l'état hydrique. Par exemple, la première couche du sol sondé présente une haute compacité et une faible teneur en eau, l'unité de traitement en déduit alors qu'il s'agit probablement d'une couche de ballast. En revanche, comme la dernière couche est très humide et moyennement compacte, l'unité de traitement la catégorise comme une couche de limon.

Ce traitement automatique des images issus de l'essai géo-endoscopique et le couplage automatique avec les données de résistance du sol obtenues au moyen du pénétromètre 2 permettent d'obtenir une caractérisation rapide de l'état du sol et de sa composition. Le pénétromètre 2, le dispositif 1 et l'unité de traitement forment un ensemble de caractérisation d'un sol. Par sécurité, il peut être prévu que l'homme du métier valide les résultats issus de l'unité de traitement, par exemple en comparant avec la vidéo enregistrée par le géo-endoscope 1.

Les caractéristiques techniques des variantes et modes de réalisation envisagés ci-dessus peuvent être combinées entre elles pour générer de nouveaux modes de réalisation de l'invention.

## Revendications

1. Méthode de caractérisation de l'assise (S) d'une voie ferrée, par des essais pénétrométrique et géo-endoscopique, cette méthode comprenant des étapes consistant à :
a) frapper (100) une tête de battage (20) d'un pénétromètre dynamique léger (2) pour enfoncer la pointe (10) d'un train de tiges (6) dans l'assise,
b) mesurer (102) la résistance de l'assise en fonction de la profondeur d'enfoncement du train de tiges,
c) retirer (105) le train de tiges de l'assise,
d) enfoncer (106) un tube (62) dans un trou (T) laissé par le train de tiges, et à
e) faire coulisser (108) une caméra (66) d'enregistrement d'images à l'intérieur du tube,
et étant **caractérisée en ce qu'**elle comprend des étapes supplémentaires automatisées consistant à :
f) mesurer (110) en continu la position de la caméra (66) pendant qu'elle coulisse à l'intérieur du tube (62), c'est-à-dire la profondeur (Zi) à laquelle sont enregistrées les images, et à
g) coupler (120) une analyse des images enregistrées en fonction de la profondeur avec les mesures de résistance du sol pour caractériser les différentes couches de l'assise.

2. Méthode selon la revendication 1, **caractérisée en ce qu'**elle comprend une étape supplémentaire consistant à géo-localiser la position à laquelle sont effectués les étapes a) à f).

3. Méthode selon l'une des revendications 1 et 2, **caractérisée en ce que** l'étape c) s'effectue en laissant la pointe (10) du train de tiges (6) au fond du trou (T).

4. Méthode selon l'une des revendications précédentes, **caractérisée en ce que** l'analyse des images enregistrées par la caméra (66) en fonction de la profondeur (Zi), au cours de l'étape g), est effectuée à partir de la variation de différents paramètres (M1(Zi), M2(Zi), M3(Zi)) relatifs aux images enregistrées.

5. Méthode selon la revendication 4, **caractérisée en ce que** l'étape g) inclut deux sous-étapes automatisées consistant à :
i. déterminer automatiquement des valeurs de profondeur (Zi) significatives, à partir desquelles les différents paramètres (M1(Zi), M2(Zi), M3(Zi)) relatifs aux images enregistrées et la résistance de l'assise varient sensiblement, et
ii. effectuer une analyse statistique, par exemple une moyenne, des valeurs de profondeur significatives pour estimer l'épaisseur des couches de l'assise (S).

6. Méthode selon la revendication 5, **caractérisée en ce que** l'étape g) inclut une autre sous-étape automatisée consistant à
iii. analyser les valeurs des différents paramètres (M1(Zi), M2(Zi), M3(Zi)) relatifs aux images enregistrées sur l'épaisseur des différentes couches pour déterminer l'état hydrique de ces dernières.

7. Ensemble (1, 2) de caractérisation de l'assise (S) d'une voie ferrée, comprenant un pénétromètre dynamique léger (2), qui comporte :
- une tête de battage (20),
- un train de tiges (6), équipé d'une pointe (10) de pénétration dans l'assise, et
- des moyens (34, 26, 36, 28) de mesure de la résistance de l'assise en fonction de la profondeur (Zi),
cet ensemble étant **caractérisé en ce qu'**il comprend en outre :
- un dispositif (1) pour visualiser l'intérieur d'un sol (S), comprenant :
- une caméra endoscopique (66) d'enregistrement d'images,
- un tube (62) de coulissement de la caméra, qui est adapté pour être enfoncé dans un trou (T) réalisé dans le sol, et
- des moyens (68, 70) de mesure automatique et en continu de la position de la caméra (66) pendant qu'elle coulisse à l'intérieur du tube (62), c'est-à-dire de la profondeur (Zi) à laquelle sont enregistrées les images,
- une unité de traitement, configurée pour coupler les images, enregistrées par le dispositif (1), avec des mesures de résistance de l'assise, fournies par les moyens de mesure du pénétromètre (2), pour caractériser les différentes couches de l'assise.

8. Ensemble selon la revendication 7, **caractérisé en ce que** les moyens de mesure (68, 70) du dispositif (1) comprennent un codeur rotatif (70) et **en ce que** la caméra (66) est suspendue au bout d'un fil (64) qui est enroulé autour d'une roue mobile (68) couplée au codeur rotatif.

9. Ensemble selon l'une des revendications 7 et 8, **caractérisé en ce que** le dispositif (1) est muni d'une antenne de géolocalisation (84).

## Patentansprüche

1. Verfahren zur Charakterisierung der Tragschicht (S) eines Gleiswegs durch penetrometrische und geoendoskopische Versuche, wobei dieses Verfahren Schritte umfasst, bestehend aus:
a) Einschlagen (100) eines Eintreibkopfs (20) eines leichten dynamischen Penetrometers (2), um die Spitze (10) eines Bohrgestänges (6) in die Tragschicht einzutreiben,
b) Bestimmen (102) des Widerstands der Tragschicht in Abhängigkeit von der Eintreibtiefe des Bohrgestänges,
c) Herausziehen (105) des Bohrgestänges aus der Tragschicht,
d) Eintreiben (106) eines Rohres (62) in ein durch das Bohrgestänge belassenes Loch (T), und
e) Verschieben (108) einer Kamera (66) zur Aufzeichnung von Bildern im Inneren des Rohres,
und **dadurch gekennzeichnet ist, dass** es zusätzliche automatisierte Schritte umfasst, bestehend aus:
f) kontinuierlichem Bestimmen (110) der Position der Kamera (66), während sie im Inneren des Rohres (62) verschoben wird, das heißt, der Tiefe (Zi), bei der die Bilder aufgezeichnet werden, und
g) Koppeln (120) einer Auswertung der aufgezeichneten Bilder in Abhängigkeit von der Tiefe mit den Bestimmungen des Widerstands des Bodens, um die verschiedenen Schichten der Tragschicht zu charakterisieren.

2. Verfahren nach Anspruch 1, **dadurch gekennzeichnet, dass** es einen zusätzlichen Schritt umfasst, bestehend aus dem Geolokalisieren der Position, in der die Schritte a) bis f) durchgeführt werden.

3. Verfahren nach einem der Ansprüche 1 und 2, **dadurch gekennzeichnet, dass** der Schritt c) durchgeführt wird, indem die Spitze (10) des Bohrgestänges (6) am Boden des Lochs (T) belassen wird.

4. Verfahren nach einem der vorhergehenden Ansprüche, **dadurch gekennzeichnet, dass** die Auswertung der von der Kamera (66) aufgezeichneten Bilder in Abhängigkeit von der Tiefe (Zi) während Schritt g), ausgehend von der Veränderung verschiedener Parameter (M1(Zi), M2(Zi), M3(Zi)) in Bezug auf die aufgezeichneten Bilder durchgeführt wird.

5. Verfahren nach Anspruch 4, **dadurch gekennzeichnet, dass** der Schritt g) zwei automatisierte Teilschritte enthält, bestehend aus:
i. automatischem Ermitteln signifikanter Werte der Tiefe (Zi), bei denen die verschiedenen Parameter (M1(Zi), M2(Zi), M3(Zi)) in Bezug auf die aufgezeichneten Bilder und der Widerstand der Tragschicht sich deutlichverändern, und
ii. Durchführen einer statistischen Auswertung, zum Beispiel eines Mittelwertes, der signifikanten Werte der Tiefe, um die Dicke der Schichten der Tragschicht (S) abzuschätzen.

6. Verfahren nach Anspruch 5, **dadurch gekennzeichnet, dass** der Schritt g) einen weiteren automatisierten Teilschritt umfasst, bestehend aus:
iii. Auswerten der Werte der verschiedenen Parameter (M1(Zi), M2(Zi), M3(Zi)) in Bezug auf die aufgezeichneten Bilder über die Dicke der verschiedenen Schichten, um den Wasserzustand letzterer zu ermitteln.

7. Anordnung (1, 2) zur Charakterisierung der Tragschicht (S) eines Gleiswegs, umfassend ein leichtes dynamisches Penetrometer (2), das Folgendes aufweist:
- einen Eintreibkopf (20),
- ein Bohrgestänge (6), das mit einer Spitze (10) zum Eindringen in die Tragschicht versehen ist, und
- Einrichtungen (34, 26, 36, 28) zum Bestimmen des Widerstands der Tragschicht in Abhängigkeit von der Tiefe (Zi),
wobei diese Anordnung **dadurch gekennzeichnet ist, dass** sie ferner Folgendes umfasst:
- eine Vorrichtung (1) zum Anzeigen des Inneren eines Bodens (S), umfassend:
- eine Endoskop-Kamera (66) zum Aufzeichnen von Bildern,
- ein Rohr (62) zum Verschieben der Kamera, das geeignet ist, um in ein in dem Boden realisiertes Loch (T) eingetrieben zu werden, und
- Einrichtungen (68, 70) zum automatischen und kontinuierlichen Bestimmen der Position der Kamera (66), während sie im Inneren des Rohres (62) verschoben wird, das heißt, der Tiefe (Zi), bei der die Bilder aufgezeichnet werden,
- eine Verarbeitungseinheit, die ausgestaltet ist zum Koppeln der von der Vorrichtung (1) aufgezeichneten Bilder mit Bestimmungen des Widerstands der Tragschicht, die durch die Messeinrichtungen des Penetrometers (2) bereitgestellt werden, um die verschiedenen Schichten der Tragschicht zu charakterisieren.

8. Anordnung nach Anspruch 7, **dadurch gekennzeichnet, dass** die Messeinrichtungen (68, 70) der Vorrichtung (1) einen Drehgeber (70) umfassen und dass die Kamera (66) am Ende eines Drahtes (64) befestigt ist, der um ein bewegliches Rad (68), das mit dem Drehgeber verbunden ist, gewickelt ist.

9. Anordnung nach einem der Ansprüche 7 und 8, **dadurch gekennzeichnet, dass** die Vorrichtung (1) mit einer Geolokalisierungsantenne (84) versehen ist.

## Claims

1. A method for characterizing the seat (S) of a railroad track through penetrometric and geo-endoscopic tests, the method comprising the following steps:
a) striking (100) a ram head (20) of a light dynamic penetrometer (2) to push the tip (10) of a train of rods (6) into the seat,
b) measuring (102) the resistance of the seat as a function of the pushing in depth of the train of rods,
c) (105) removing the train of rods from the seat,
d) pushing (106) a tube (62) into a hole (T) left by the train of rods, and
e) sliding (108) an image-recording camera (66) inside the tube,
and being **characterized in that** it comprises the following additional automated steps:
f) continuously measuring (110) the position of the camera (66) while it slides inside the tube (62), i.e., the depth (Zi) at which the images are recorded, and
g) coupling (120) an analysis of the recorded images as a function of the depth with the strength measurements of the ground to characterize the different layers of the seat.

2. The method according to claim 1, **characterized in that** it comprises an additional step consisting of geo-locating the position at which steps a) to f) are carried out.

3. The method according to one of claims 1 and 2, **characterized in that** step c) is carried out by leaving the tip (10) of the train of rods (6) at the bottom of the hole (T).

4. The method according to one of the preceding claims, **characterized in that** the analysis of the images recorded by the camera (66) as a function of the depth (Zi), during step g), is done from the variation of different parameters (M1(Zi), M2(Zi) and M3(Zi)) relative to the recorded images.

5. The method according to claim 4, **characterized in that** step g) includes two automated sub-steps consisting of:
i. automatically determining significant depth values (Zi), from which the various parameters (M1(Zi), M2(Zi) and M3(Zi)) relative to the recorded images and the resistance of the seat vary considerably, and
ii. performing a statistical analysis, for example an average, of the significant depth values to estimate the depth of the layers of the seat (S).

6. The method according to claim 5, **characterized in that** step g) includes another automated sub-step consisting of:
iii. analyzing the values of the different parameters (M1(Zi), M2(Zi) and M3(Zi)) relative to the images recorded over the depth of the different layers to determine the hydric state thereof.

7. An assembly (1, 2) for characterizing the seat (S) of a railroad track, comprising a light dynamic penetrometer (2), which includes:
- a ram head (20),
- a train of rods (6), equipped with a tip (10) penetrating the seat, and
- means (34, 26, 36, 28) for measuring the strength of the seat as a function of the depth (Zi),
said assembly being **characterized in that** it further comprises:
- a device (1) for viewing the inside of a ground (S), comprising:
- an endoscopic camera (66) for recording images,
- a sliding tube (62) for the camera, which is suitable for being pushed into a hole (T) formed in the ground, and
- means (68, 70) for automatically and continuously measuring the position of the camera (66) while it slides inside the tube (62), i.e., the depth (Zi) at which the images are recorded,
- a processing unit, configured to couple the images, recorded by the device (1), with strength measurements of the seat, provided by the measuring means of the penetrometer (2), to characterize the different layers of the seat.

8. The assembly according to claim 7, **characterized in that** the measuring means (68, 70) comprise a rotating coder (70), and **in that** the camera (66) is suspended at the end of a wire (64) that is wound around a moving wheel (68) coupled to the rotating coder.

9. The assembly according to one of claims 7 and 8, **characterized in that** the device (1) is provided with a geolocation antenna (84).
